Europäisches Patentamt

European Patent Office

Office européen des brevets

(11) Veröffentlichungsnummer: **0 265 378**
**B1**

(12) # EUROPÄISCHE PATENTSCHRIFT

(45) Veröffentlichungstag der Patentschrift:
25.04.90

(51) Int. Cl.⁴: **B23B 31/02**

(21) Anmeldenummer: **87810567.5**

(22) Anmeldetag: **02.10.87**

(54) **Handgerät mit Werkzeughalter.**

(30) Priorität: **23.10.86 DE 3636026**

(43) Veröffentlichungstag der Anmeldung:
**27.04.88 Patentblatt 88/17**

(45) Bekanntmachung des Hinweises auf die Patenterteilung:
**25.04.90 Patentblatt 90/17**

(84) Benannte Vertragsstaaten:
**CH DE FR GB LI NL SE**

(56) Entgegenhaltungen:
**DE-A- 3 432 918
DE-C- 3 509 165
DE-C- 3 510 711**

(73) Patentinhaber: **HILTI Aktiengesellschaft,
FL-9494 Schaan(LI)**

(72) Erfinder: **Brix, Peter, Wölflstrasse 7,
D-8122 Penzberg(DE)**

(74) Vertreter: **Wildi, Roland et al, Hilti Aktiengesellschaft
Patentabteilung, FL-9494 Schaan(LI)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Handgerät, wie Bohrmaschine, Bohrhammer, Schrauber und dgl., mit an einer Drehspindel angeordnetem Werkzeughalter, der eine Mitnahmehülse mit Durchtrittsöffnungen für radial verschiebbare Verriegelungselemente aufweist, wobei die Mitnahmehülse von einem verdrehbaren, die Verriegelungselemente in Ausnehmungen der Drehspindel haltenden Stützring umgeben ist und die Drehspindel und die Mitnahmehülse Anschlagschultern für die gegenseitige axiale Abstützung aufweisen, siehe DE-A 3 310 371.

Der Werkzeughalter ist bei Handgeräten der genannten Art hohen Beanspruchungen ausgesetzt und zwecks einfachem Austausch oder Reparatur meist lösbar mit der Drehspindel verbunden.

Insbesondere bei einfacheren Geräten wird diese Verbindung sehr oft über ein Gewinde hergestellt. Ein Gewinde kann sich jedoch im Betrieb so stark festziehen, dass es sich ohne Hilfsmittel kaum mehr lösen lässt. Bei Geräten mit Drehrichtungsumkehr, wie beispielsweise bei Schraubern oder dergleichen, kann sich ein Gewinde ausserdem während des Betriebes lösen. Bei bekannten Geräten (DE-A 3 310 371) ist der Werkzeughalter mit Hilfe von radial verschiebbaren Verriegelungselementen mit der Drehspindel verbunden. Die Verriegelungselemente greifen dabei in Ausnehmungen an der Drehspindel ein und werden mit Hilfe eines die Mitnahmehülse umgebenden Stützringes gegen radiales Ausrücken gesichert. Das Lösen des Werkzeughalters erfolgt dabei nach Verdrehen des Stützringes, wobei die Verriegelungselemente in Aussparungen am Stützring ausrücken können. Diese Art der Verbindung weist den Nachteil auf, dass sie nicht spielfrei ist und sich die Mitnehmerhülse gegenüber der Drehspindel somit in begrenztem Masse axial verschieben und verdrehen kann, sofern nicht zusätzliche, einen gesonderten Aufwand hervorrufende Sicherungsmittel, wie Spezialschrauben, verwendet werden.

Bei weiteren bekannten Geräten (DE-A 3 509 165) ist der Werkzeughalter mittels einer radial verschiebbaren Kugel mit der Drehspindel verbunden. Die Drehspindel weist eine Vertiefung auf, in welche die Kugel bei entsprechender Drehstellung eines Stützringes eingreift, so dass der Werkzeughalter gegenüber der Drehspindel axial festgelegt ist. Die Kugel kann dabei zusätzlich eine Drehmitnahme-Funktion ausüben. In einer weiteren Drehstellung des Stützringes kann die Kugel radial aus der Vertiefung heraus in eine Aussparung des Stützringes einrücken, bleibt jedoch im Eingriff mit einer mit der Vertiefung in Verbindung stehenden, als axial verlaufende Nut ausgebildeten Auflauframpe. Dadurch ist der Werkzeughalter in dieser Stellung gegenüber der Drehspindel begrenzt axial verschieb- aber nicht verdrehbar. Auch diese Lösung weist den Nachteil auf, dass die Verbindung nicht spielfrei ist.

Der Erfindung liegt die Aufgabe zugrunde, eine Verbindung eines Werkzeughalters mit einer Drehspindel zu schaffen, die leicht lösbar ist und im Betrieb kein Spiel aufweist.

Gemäss der Erfindung wird diese Aufgabe dadurch gelöst, dass die Ausnehmungen an der dem freien Ende der Drehspindel benachbarten Seite mit Auflauframpen für die Verriegelungselemente versehen sind und dass die Auflauframpen vom freien Ende der Drehspindel weg in beiden Drehrichtungen gegenläufig schraubenlinienförmig geneigt verlaufen und die Verriegelungselemente als Kugeln ausgebildet sind.

Die Verriegelungselemente stützen sich somit in axialer Richtung einersits an den Durchtrittsöffnungen der Mitnahmehülse und andererseits an der Auflauframpe der Ausnehmungen an der Drehspindel ab. Durch das Auflaufen der Verriegelungselemente an den geneigt verlaufenden Auflauframpen entsteht eine Kraftkomponente in axialer Richtung, welche die Mitnahmehülse gegenüber der Drehspindel axial verschieben will. Eine axiale Relativ-Verschiebung ist aber nur soweit möglich, bis die Anschlagschultern an der Drehspindel und an der Mitnahmehülse zur Anlage gelangen. Dabei wird allfällig vorhandenes axiales Spiel zwischen der Mitnahmehülse und der Drehspindel aufgehoben. In der Folge entsteht eine Verspannung der Mitnahmehülse gegenüber der Drehspindel über die Verriegelungselemente.

Da die Auflauframpen schraubenlinienförmig geneigt verlaufen, werden die Verriegelungselemente durch das zu übertragende Drehmoment gegen die Auflauframpen gedrückt. Die Kraftkomponente in axialer Richtung ist direkt proportional zum zu übertragenden Drehmoment. Bei grösser werdendem Drehmoment werden die Anschlagschultern daher stärker gegeneinander gepresst. Somit wird auch der an den Anschlagschultern durch Reibung übertragbare Drehmomentanteil grösser. Durch Verdrehen der Mitnahmehülse in der entgegengesetzten Drehrichtung wird die Verspannung wieder aufgehoben.

Um diese Handgeräte auch zum Ein- und Ausdrehen von Schrauben verwenden zu können, sind heute viele Geräte mit einer Links-/-Rechts-Schaltung versehen. Damit auch in diesen Fällen eine sichere Verbindung des Werkzeughalters mit der Drehspindel ermöglicht wird, verlaufen die Auflauframpen vom freien Ende der Drehspindel weg in beiden Drehrichtungen gegenläufig geneigt. Je nach Drehrichtung des Gerätes laufen dabei die Verriegelungselemente an der einen oder an der anderen Auflauframpe auf. Zwischen den beiden verspannten Stellungen kann ein gewisses Drehspiel auftreten. Dieses wird jedoch im Betrieb bei jeder Drehrichtungsumkehr automatisch wieder aufgehoben.

Durch die beim Auflaufen der Verriegelungselemente an den Auflauframpen entstehende axiale Verspannung werden die Drehspindel und die Mitnahmehülse an den Anschlagschultern axial gegeneinander gepresst. Dabei wird an diesen Anschlagschultern infolge der Reibung auch ein Teil des Drehmomentes übertragen. Die an sich der Übertragung des Drehmomentes dienenden Verriegelungselemente werden um diesen Teil entlastet. Diese axiale Verspannung ist bei kleinem Steigungswinkel der Auflauframpen gross. Bei grösserem Steigungswinkel wird die Verspannung kleiner. Da die Verbindung insbesondere bei Drehrichtungsumkehr jedoch leicht lösbar sein soll, sind dem Steigungswinkel nach unten infolge der Selbsthemmung Grenzen gesetzt. Um allen Bedingungen nachzukommen, beträgt daher der Steigungswinkel der Auflauframpen vorteilhafterweise 15° bis 45°, vorzugsweise 30°. Ein Steigungswinkel in dieser Grössenordnung liegt mit Sicherheit ausserhalb des Selbsthemmungs-Bereiches. Die Verbindung kann daher ohne Hilfswerkzeuge relativ leicht wieder gelöst werden. Die erreichbare axiale Verspannung ist dabei etwa so gross wie die an den Verriegelungselementen angreifende Kraft in Umfangsrichtung.

Durch die Verspannung werden die Verriegelungselemente sowohl in Umfangsrichtung als auch in axialer Richtung belastet. Die aus diesen Belastungen resultierende Beanspruchung verläuft schräg zur Längsachse des Werkzeughalters. Da die Verriegelungselemente als Kugeln ausgebildet sind, kommt es dabei nicht zu einer Überbeanspruchung. Zudem sind Kugeln relativ einfach herstellbar oder können bei Verwendung genormter Grössen auch fertig vom Handel bezogen werden. Da Kugeln keine bevorzugte Rotationsachse aufweisen, können sie sich optimal zwischen den Durchtrittsöffnungen der Mitnehmerhülse und den Auflaufschrägen an der Drehspindel einstellen.

Die Erfindung soll nachstehend anhand der sie beispielsweise wiedergebenden Zeichnungen näher erläutert werden. Es zeigen:

Fig. 1 ein erfindungsgemässes Handgerät, in Ansicht,
Fig. 2 die Verbindung des Werkzeughalters mit der Drehspindel des in Fig. 1 dargestellten Handgerätes, teilweise im Schnitt dargestellt,
Fig. 3 eine Ansicht des in Fig. 2 dargestellten Werkzeughalters, in vergrössertem Massstab, in Richtung des Pfeiles III,
Fig. 4 einen Querschnitt, durch den in Fig. 2 dargestellten Werkzeughalter, entlang der Linie IV - IV,
Fig. 5 einen Querschnitt durch den in Fig. 2 dargestellten Werkzeughalter, entlang der Linie V - V.

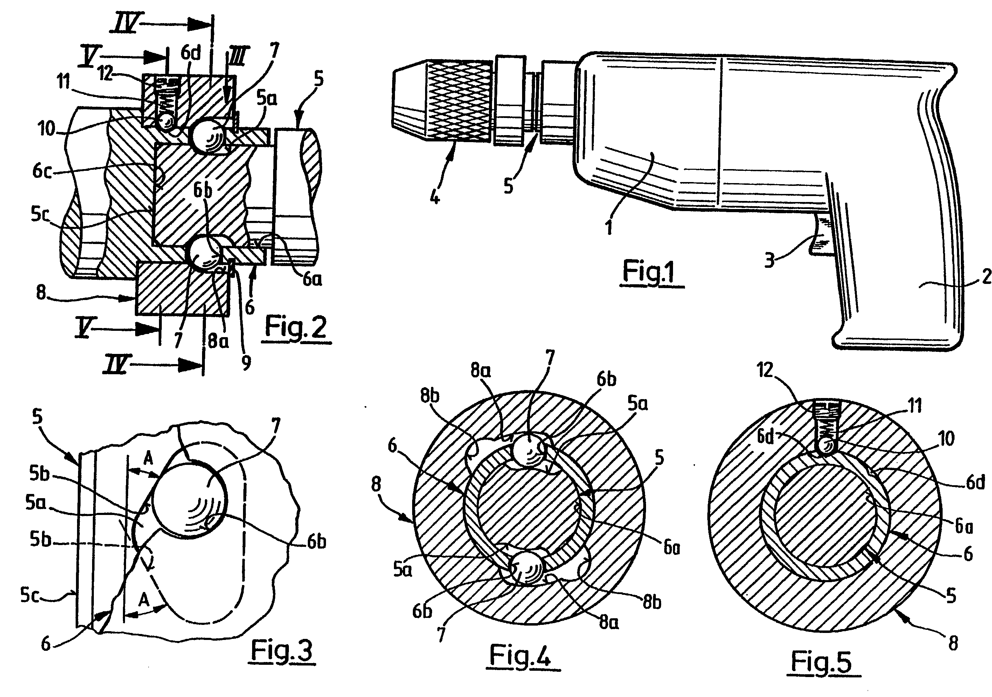

Das aus Fig. 1 ersichtliche Handgerät weist ein Gehäuse 1 mit einem seitlich davon wegragenden Handgriff 2 auf. Der Handgriff 2 ist mit einem Drücker 3 zum Ein- und Ausschalten des Handgerätes versehen. Ein insgesamt mit 4 bezeichneter Werkzeughalter ist mit der insgesamt mit 5 bezeichneten Drehspindel verbunden.

Die Figuren 2 bis 5 zeigen die Drehspindel 5, welche zwei einander gegenüberliegende Ausnehmungen 5a aufweist. Eine insgesamt mit 6 bezeichnete Mitnahmehülse ist auf das zapfenförmige Ende der Drehspindel 5 aufgesteckt. Die Mitnahmehülse 6 weist zu diesem Zweck eine der Drehspindel 5 entsprechende Aufnahmebohrung 6a auf. Im Bereich der Aufnahmebohrung 6a befinden sich zwei einander diametral gegenüberliegende Durchtrittsöffnungen 6b, in welche kugelförmige Verriegelungselemente 7 eingesetzt sind. Die Verriegelungselemente 7 dienen einerseits der Drehmomentübertragung und andererseits der axialen Verspannung der Drehspindel 5 gegenüber der Mitnahmehülse 6. Wie insbesondere aus Fig. 3 ersichtlich ist, weisen die Ausnehmungen 5a an der dem freien Ende der Drehspindel 5 benachbarten Seite geneigt verlaufende Auflauframpen 5b auf. Bei einer Relativ-Verdrehung der Mitnahmehülse 6 gegenüber der Drehspindel 5 laufen die Verriegelungselemente 7 an der Auflauframpe 5b auf und bewirken dabei eine axiale Verspannung der Mitnahmehülse 6 gegenüber der Drehspindel 5. Dabei werden die Mitnahmehülse 6 und die Drehspindel 5 an den Anschlagschultern 5c, 6c axial gegeneinander gepresst. Durch die auftretende Haftreibung wird somit ein Teil des Drehmomentes über die Anschlagschultern 5c, 6c übertragen. Die Mitnahmehülse 6 ist von einem insgesamt mit 8 bezeichneten Stützring umgeben. Der Stützring 8 ist auf der Mitnahmehülse 6 verdrehbar gelagert. Ein Sicherungsring 9 verhindert ein axiales Verschieben des Stützringes 8 auf der Mitnahmehülse 6. Wie insbesondere aus Fig. 4 ersichtlich ist, weist der Stützring 8 an seiner Innenseite zwei Taschen 8a auf, welche der Aufnahme des die Mitnahmehülse 6 überragenden Teiles der Verriegelungselemente 7 dienen. Der eine Endbereich der Taschen 8a ist mit Vertiefungen 8b versehen. Beim Verdrehen des Stützringes 8 im Uhrzeigersinn gelangen die Verriegelungselemente 7 in den Bereich der Vertiefungen 8b und können somit radial aus dem Ausnehmungen 5a der Drehspindel 5 ausrücken. Dadurch wird die Verbindung zwischen der Drehspindel 5 und der Mitnahmehülse 6 gelöst, sodass die Mitnahmehülse 6 von der Drehspindel 5 abgezogen werden kann. Die beiden Endstellungen des Stützringes 8 werden durch eine aus einer Rastkugel 10, einer Druckfeder 11 und einem Gewindestift 12 bestehende Kugelraste festgelegt. Die Rastkugel 10 rastet dabei in eine Rastöffnung 6d an der Mitnahmehülse 6 ein.

Durch die Anordnung von zwei vom freien Ende der Drehspindel weg in beiden Drehrichtungen gegenläufig geneigt verlaufenden Auflauframpen kommt die geschilderte Verspannung in beiden Drehrichtungen des Handgerätes zustande. Bei einer Umkehr der Drehrichtung während des Betriebes bewegen sich die Verriegelungselemente 7 von einer Auflauframpe 5b zur anderen. Das dabei entstehende axiale Spiel wird jedoch sofort wieder aufgehoben. Der Steigungswinkel A der Auflauframpen 5b beträgt etwa 30°. Ein Winkel in dieser Grössenordnung ermöglicht eine genügend grosse axiale Vorspannung und ein einfaches Lösen der Verbindung bei einer Drehrichtungsumkehr oder zum Entfernen des Werkzeughalters.

**Patentansprüche**

1. Handgerät, wie Bohrmaschine, Bohrhammer, Schrauber und dgl. mit an einer Drehspindel (5) angeordnetem Werkzeughalter (4), der eine Mitnahmehülse (6) mit Durchtrittsöffnungen (7) aufweist, wobei die Mitnahmehülse (6) von einem verdrehbaren, die Verriegelungselemente (7) in Ausnehmungen (5a) der Drehspindel (5) haltenden Stützring (8) umgeben ist und die Drehspindel (5) und die Mitnahmehülse (6) Anschlagschultern (5c, 6c) für die gegenseitige axiale Abstützung aufweisen, dadurch gekennzeichnet, dass die Ausnehmungen (5a) an der dem freien Ende der Drehspindel (5) benachbarten Seite mit Auflauframpen (5b) für die Verriegelungselemente (7) versehen sind und dass Auflauframpen (5b) vom freien Ende der Drehspindel (5) weg in beiden Drehrichtungen gegenläufig schraubenlinienförmig geneigt verlaufen und die Verriegelungselemente (7) als Kugeln ausgebildet sind.

2. Handgerät nach Anspruch 1, dadurch gekennzeichnet, dass der Steigungswinkel (A) der Auflauframpen (5b) 15° bis 45°, vorzugsweise 30° beträgt.

## Claims

1. A hand-tool, such as a drilling machine, a hammer drill, a screwer and the like, having a tool holder (4) which is arranged on a rotatable spindle (5) and which has an entrainment sleeve (6) having passage apertures (7), in which respect the entrainment sleeve (6) is surrounded by a rotatable supporting ring (8) which holds the locking elements (7) in recesses (5a) of the rotary spindle (5) and the rotary spindle (5) and the entrainment sleeve (6) have stop shoulders (5c, 6c) for the mutual axial support, characterised in that the recesses (5a), on the side adjacent to the free end of the rotary spindle (5), are provided with run-up ramps (5b) for the locking elements (7) and in that the run-up ramps (5b) extend inclined in an oppositely-directed helical manner away from the free end of the rotary spindle in both directions of rotation and the locking elements (7) are designed as spheres.

2. A hand-operated tool according to claim 1, characterised in that the angle of inclination (A) of the run-up ramps (5b) amounts to 15° up to 45°, preferably 30°.

## Revendications

1. Instrument portatif tel que perceuse, marteau perforateur, tournevis et analogues, avec porte-outil (4) disposé sur une broche tournante (5) et présentant une douille d'entraînement (6) avec des ouvertures de passage (7), la douille d'entraînement (6) étant entourée d'une bague d'appui (8) tournante qui maintient les éléments de verrouillage (7) dans des évidements (5a) de la broche tournante (5), et la broche tournante (5) et la douille d'entraînement (6) comportant des épaulements de butée (5c, 6c) pour l'appui mutuel dans le sens axial, caractérisé en ce que les évidements (5a) sont munis, du côté voisin de l'extrémité libre de la broche tournante (5), de rampes d'arrêt (5b) pour les éléments de verrouillage (7), qu'à partir de l'extrémité libre de la broche tournante (5), les rampes d'arrêt (5b) sont inclinées en hélice en sens opposé dans les deux sens de rotation, et que les éléments de verrouillage (7) sont conformés en billes.

2. Instrument portatif selon la revendication 1, caractérisé en ce que l'angle d'hélice (A) des rampes d'arrêt (5b) est de 15° à 45°, de préférence de 30°.

Fig.1

Fig.2

Fig.3

Fig.4

Fig.5